# EUROPÄISCHE PATENTANMELDUNG

(11) **EP 1 427 024 A2**
(43) Veröffentlichungstag der Anmeldung: **09.06.2004**
(21) Anmeldenummer: 03405825.5
(22) Anmeldetag: 20.11.2003
(51) Int. Cl.: H01L 31/048, H01L 31/042

(54) **Solarglas**

(30) Priorität: 02.12.2002 CH 20322002
(71) Anmelder: Interfloat Corporation, 9493 Mauren (LI)
(72) Erfinder: Weikinger, Josef, 9493 Mauren Fürstentum Lichtenstein (LI); Schubert, Roland, 87657 Görisried (DE)
(74) Vertreter: Walder, Martin Bernhard

(57) **Zusammenfassung**

Die Verwendung einer gehärteten Flachglas-Scheibe (11), mit zwei einander gegenüberliegenden, parallelen Oberflächen (13,14), einer oder mehreren elektrischen Leiterbahnen (15,6) an einer dieser Oberflächen (13), mit welchen Leiterbahnen (15,16) insbesondere parallele gerade Leiterbahnabschnitte (19) und/oder parallel ausgerichtete, von einer Geraden abweichende Leiterbahnabschnitte gebildet sind, als Deckscheibe (11) eines photovoltaischen oder thermischen Solarpanels (21) weist den Vorteil auf, dass das Solarpanel (21) von Schnee und Eis befreit werden kann, indem die elektrische Widerstände bildenden Leiterbahnabschnitte (19) mit Strom aufgeheizt werden.

## Beschreibung

Die Erfindung betrifft eine Flachglas-Scheibe gemäss dem Oberbegriff des Anspruchs 1, ein photovoltaisches oder thermisches Solarpaneel mit einer Deckscheibe aus Solarglas gemäss dem Oberbegriff des Anspruchs 9, eine Solaranlage nach dem Oberbegriff des Anspruchs 10, ein Verfahren zur Herstellung einer Solarglasscheibe gemäss Oberbegriff des Anspruchs 16, sowie die Verwendung einer gehärteten Flachglas-Scheibe.

Bei photovoltaischen und thermischen Solaranlagen ist der Wirkungsgrad von zentraler Bedeutung. Unter Wirkungsgrad wird verstanden, wieviel der einfallenden Sonneneinstrahlung in nutzbare Energie umgewandelt werden kann. Der Jahreswirkungsgrad gibt an, wie hoch der Wirkungsgrad im jährlichen Durchschnitt ist. Es werden im Stand der Technik verschiedenste Massnahmen vorgeschlagen, um möglichst viel der pro Quadratmeter einfallenden Sonneneinstrahlung in nutzbare elektrische Energie oder Wärmeenergie umzuwandeln. Die Massnahmen sind unter anderem darauf gerichtet, die Beschattung von Solaranlagen und die Reflexion von Solarglas zu minimieren, oder die Transmission von Solarglas zu erhöhen.

Bei Solaranlagen sind die Gestehungskosten im Vergleich mit der Jahresleistung und den Kosten für die Erbringung derselben Leistung mit nicht erneuerbarer Energie zur Zeit noch sehr hoch. Die vorgeschlagenen Massnahmen zur Erhöhung des Wirkungsgrads einer Solaranlage sind daher jeweils auch unter dem Gesichtspunkt einer Kosten-Nutzen-Abwägung zu werten.

Bei der Bemessung von Solaranlagen sind neben den am Standort herrschenden Sonneneinstrahlungswerten wie Einstrahlungswinkel, Sonnenscheindauer und Intensität auch die Leistungsanforderungen an die Solaranlage zu berücksichtigen. Dabei sind in der Regel die grösste zu erbringende Leistung und die zum Zeitpunkt dieser Leistungserbringung zur Verfügung stehende Sonneneinstrahlung, sowie der Wirkungsgrad der Solaranlage massgebend.

Da im Winter aufgrund der Temperaturdifferenzen zwischen Innenraum und Aussenraum mehr thermische Energie verbraucht wird als im Sommer, kann die aus der Sonneneinstrahlung gewonnene Wärmeenergie in der kalten Jahreszeit meist zu 100 Prozent genutzt werden. Die Leistung einer thermischen Solaranlage könnte entscheidend angehoben werden, wenn der Wirkungsgrad insbesondere in der kalten Jahreszeit angehoben würde. Demgegenüber führt eine Verbesserung des Wirkungsgrads im Sommer lediglich zu einer Erhöhung des in der warmen Jahreszeit ohnehin anfallenden Energieüberschusses.

Der Wirkungsgrad von photovoltaischen Anlagen ist in der kalten Jahreszeit aufgrund der niedrigeren Temperaturen höher als im Sommer. Dies kommt dem erhöhten Energiebedarf und der kürzeren täglichen maximalen Sonnenscheindauer entgegen. Die Tatsache, dass in vielen Berggegenden gerade im Winter relativ viel Sonnenschein zu erwarten ist, wirkt dort zu einer über das Jahr hinweg relativ konstanten Energiegewinnung. Dennoch ist die im Winter gewinnbare elektrische Energie in der Regel die für die Bemessung einer Photovoltaik-Anlage massgebende Grösse.

Aufgrund obiger Ausführungen ist zu schliessen, dass das Winterhalbjahr für Solaranlagen die effizientere Jahreszeit ist als das Sommerhalbjahr. Je mehr Energie daher mit einer thermischen oder photovoltaischen Anlage im Winter gewonnen werden kann, desto kleiner kann die Anlage dimensioniert werden und umso kostengünstiger kann ganzjährig Energie gewonnen werden.

Ausgerechnet im für Solaranlagen effizienteren Winter kann die einfallende Sonnenstrahlung nicht optimal genutzt werden, weil nach Schneefällen die Solaranlagen oft über längere Zeit mit Schnee bedeckt bleiben. Bei Solaranlagen zur Gewinnung von Wärmeenergie und solchen zur Gewinnung von elektrischer Energie wirkt sich eine Schneeschicht auf der Solaranlage sofort verheerend auf deren Leistung aus. Dies trifft insbesondere hochgelegene, schneereiche Standorte, an denen meist relativ wirtschaftliche Inselanlagen eingesetzt werden.

Da Solaranlagen meist an schlecht zugänglichen und exponierten Lagen, insbesondere auf Dächern installiert sind, ist eine Entfernung einer Schneeschicht mit Schaufel und Besen nicht nur arbeitsintensiv und daher teuer. Diese Arbeit ist auch gefährlich und Ihre Ausführung oft nicht verantwortbar.

Es ist daher Aufgabe der Erfindung, die Kosten pro Energieeinheit für die Energiegewinnung mittels Solaranlagen zu senken. Insbesondere soll die benötigte Fläche für Solaranlagen an schneereichen Standorten reduziert werden können. Es ist eine weitere Aufgabe der Erfindung, die Effizienz von Solaranlagen im Winter zu steigern. Insbesondere soll die Erfindung erreichen, dass die Sonneneinstrahlung nach Schneefällen die Solarzellen und/oder die Kollektorflächen einer Solaranlage möglichst rasch wieder erreichen kann.

Erfindungsgemäss wird diese Aufgabe durch die Merkmale der unabhängigen Ansprüche gelöst. Die den unabhängigen Ansprüchen gemeinsame Idee ist, die Glasscheibe einer Solaranlage über auf der Glasscheibe aufgebrachte Leiterbahnen heizbar zu machen. Das Widerstandheizen der Glasscheibe oder deren Oberfläche bewirkt das Schmelzen von darauf liegendem Schnee oder Eis. Es wird dadurch eine Wasserschicht zwischen dem Schnee oder dem Eis und der Glasfläche geschaffen, auf der die Deckschicht aus Schnee oder Eis bei geneigten Glasflächen abrutschen kann. Bei für das Abrutschen zu flach liegenden Scheiben kann durch derartiges Widerstandheizen die ganze Schneeschicht abgeschmolzen werden.

Dieses Abschmelzen oder Anschmelzen und Abrutschen-Lassen der gefrorenen Deckschicht aus Schnee und/oder Eis muss dabei nicht zu einer totalen Befreiung der Solaranlage führen. Sobald auch lediglich Ausschnitte der Solaranlage von der Sonneneinstrahlung erreicht werden, führt die Sonneneinstrahlung zu einer Erwärmung der Solaranlage. Diese Erwärmung führt innert kurzer Zeit zu einer kompletten Befreiung der Solaranlage von der anfänglich die Einstrahlung noch behindernden Deckschicht.

Erfindungsgemäss ist eine gehärtete Flachglas-Scheibe, mit zwei einander gegenüberliegenden, parallelen Oberflächen gekennzeichnet durch eine oder mehrere elektrische Leiterbahnen an einer dieser Oberflächen. Mit diesen Leiterbahnen sind Leiterbahnabschnitte gebildet. Die Leiterbahnabschnitte verlaufen nebeneinander und sind voneinander beabstandet. Sie sind insbesondere parallele gerade Leiterbahnabschnitte und/oder parallel ausgerichtete, von einer Geraden abweichende Leiterbahnabschnitte. Dadurch weist die Flachglas-Scheibe in mehr oder weniger grossen Abständen einen Leiterbahnabschnitt auf. Dieser erwärmt sich, wenn Strom durch die Leiterbahn geschickt wird. Durch die Erwärmung kann eine gefrorene Deckschicht angetaut oder abgetaut werden.

Die Leiterbahnen verringern zwar die Transmissionswerte der Glasscheibe, dennoch kann damit, verglichen mit einer identischen Glasscheibe, jedoch ohne Leiterbahnen, im Winter der Ertrag derselben Menge von Energie mit einer kleineren Fläche erreicht werden. Vorteilhaft nehmen die Leiterbahnen zweckmässigerweise einen möglichst geringen Flächenanteil der Glasfläche ein. Vorteilhaft sollen sie weniger als 2%, vorzugsweise weniger als 1,5 %, besonders bevorzugt weniger als 1% der Oberfläche der Flachglas-Scheibe abdecken. Um dies zu erreichen sind die Leiterbahnabschnitte möglichst schmal auszubilden. Die Auftragdicke der Leiterbahnen ist hingegen von untergeordneter Bedeutung und kann sich nach Querschnittbedürfnis ergeben. Die Leiterbahnabschnitte weisen daher vorteilhaft ein Breite auf, welche maximal 0,6 mm, vorzugsweise maximal 0,4, besonders bevorzugt maximal 0,3 mm misst.

Die Dichte der Anordnung von Leiterbahnen ist zweckmässigerweise möglichst klein. Diese kleine Dichte kann unterschiedlich erreicht werden. Zum einen können die Abstände zwischen zwei Leiterbahnabschnitten möglichst gross gewählt werden. Zweckmässigerweise betragen sie wenigstens 3 cm, vorzugsweise wenigstens 4, besonders bevorzugt wenigstens 6 cm. Zum andern können die Leiterbahnabschnitte ungleichmässig verteilt auf der Glasscheibe angeordnet sein. Vorteilhaft sind die Leiterbahnabschnitte in einem oben anzuordnenden Rand-Bereich der Oberfläche dichter angeordnet als in einem unteren Bereich derselben Oberfläche. Die Leiterbahnabschnitte können auch lediglich in diesem oben anzuordnenden Bereich der Oberfläche angeordnet sein. Dadurch kann immernoch ein Wasserfilm geschaffen werden, der auf der Glasscheibe nach unten fliessend eine Gleitschicht bildet, auf der die Deckschicht abrutschen kann. Auch wenn nur ein oberer Bereich der Scheibe frei wird, ist ein Abschmelzen der unterhalb dieses Bereichs liegenden Schneeschicht beschleunigt, sobald die Sonneneinstrahlung die Scheibe trifft.

Wenn das Glas einen Eisenoxid-Gehalt von weniger als 0.02 Gewichtsprozenten aufweist, besitzt das Glas eine höhere Durchlässigkeit für die Sonnenstrahlung. Dies führt zu einer rascheren Erwärmung des Solarpanels und damit zu einer rascheren Befreiung von der Deckschicht. Auch ist vorteilhaft, wenn das Glas der Glasscheiben im wesentlichen kein Chromoxid (Cr203) aufweist.

Die Glasscheibe kann eine Floatglasscheibe oder eine gezogene Glasscheibe sein. Floatglasscheiben können nicht geprägt werden. Bei Solarglas für Solarpaneele wird die hochgradige Ebenflächigkeit des Floatglases jedoch nicht benötigt. Aus diesen Gründen wird das gezogene Glas bevorzugt. Gezogene Glasscheiben können mikroskopische oder/und makroskopische, dreidimensionale Strukturen aufweisen.

Vorteilhaft ist die mit den Leiterbahnen versehene Glasoberfläche mit einer Mikrostruktur versehen. Bei dieser Mikrostruktur, welche aus Erhebungen und dazwischen liegenden Tälern besteht, beträgt der Höhenunterschied zwischen Erhebung und Tal (peak to valley) maximal 50 µm, vorzugsweise maximal 30 µm und ganz besonders bevorzugt 20 µm. Die Ausbildung von Mikrostrukturen beeinträchtigt das Abrutschverhalten von Deckschichten nicht. Die Mikrostruktur ermöglicht jedoch, die Scheibe steiler zu stellen, denn die Ausbeute an Sonnenlicht ist dank der Mikrostruktur in geringerem Masse abhängig vom Einfallswinkel der Sonnenstrahlung als bei strukturlosem Flachglas.

Zweckmässigerweise wird eine solche gehärtete Flachglas-Scheibe, mit zwei einander gegenüberliegenden, parallelen Oberflächen und einer oder mehreren elektrischen Leiterbahnen an mindestens einer dieser Oberflächen, mit welchen Leiterbahnen insbesondere parallele gerade Leiterbahnabschnitte und/oder parallel ausgerichtete, von einer Geraden abweichende Leiterbahnabschnitte gebildet sind, als Deckscheibe eines photovoltaischen oder thermischen Solarpanels verwendet. Andere Anwendungen sind beispielsweise Fassadenplatten und Wintergartenverglasungen etc.

Entsprechend weist ein photovoltaisches oder thermisches Solarpanel mit einer Deckscheibe aus Solarglas erfindungsgemäss eine oder mehrere elektrische Leiterbahnen an einer Oberfläche der Deckscheibe auf. Mit den Leiterbahnen sind heizbare, insbesondere parallele gerade Leiterbahnabschnitte und/oder parallel ausgerichtete, von einer Geraden abweichende Leiterbahnabschnitte gebildet.

Weist eine Solaranlage wenigstens ein photovoltaisches oder thermisches Solarpaneel auf, dessen Deckscheibe mit elektrischen Leiterbahnen versehen ist, so weist sie zweckmässigerweise auch eine elektrische Energiequelle und elektrischen Verbindungsleitungen zwischen der Energiequelle und den Leiterbahnen auf. Zudem ist zweckmässigerweise ein Schalter zum Verbinden und Unterbrechen des durch Leiterbahnen, Verbindungsleitungen und Energiequelle gebildeten Stromkreislaufs vorhanden. Eine Enteisung einer solchen Solaranlage kann automatisch oder manuell geschaltet werden.

Viele Solaranlagen weisen lediglich ein einziges Solarpaneel auf. Dies sind insbesondere Photovoltaikanlagen für netzautarke Stromversorgungen. Solche Stromversorgungen werden beispielsweise bei Berghütten, Strassenlaternen, Parkscheinautomaten, Bushaltestellen, Hinweisschildern, Nottelefonen etc. eingesetzt. Auch bei thermischen Solaranlage ist oft ein einzelnes photovoltaisches Solarpaneel für die Stromversorgung der Steuerung der Anlage vorhanden.

Ist wenigstens ein photovoltaisches Element vorhanden, ist die Energiequelle vorteilhaft ein mit dem photovoltaischen Element aufladbarer Akkumulator. Dabei ist der Akkumulator an die Verbindungsleitungen zu den mit Strom heizbaren Leiterbahnen angeschlossen. Diese Ausführung ist nicht allein für Insellösungen zweckmässig.

Ist ein Netzstromanschluss vorhanden, so weist die Anlage alternativ oder zusätzlich zu Photovoltaikelement und Akkumulator einen an eine Netzstrom liefernde Energiequelle anschliessbaren Strom/Spannungswandler auf. Der Ausgang diesen Strom/Spannungswandlers ist an die Verbindungsleitungen angeschlossen.

Vorteilhaft weist eine solche Solaranlage eine Steuerung zum Betätigen des Schalters und wenigstens einen an die Steuerung angeschlossenen Sensor auf. Dies erlaubt, die Enteisung der Anlage aufgrund von Sensorsignalen vorzunehmen, so dass die Enteisung nicht manuell eingeschaltet und ausgeschaltet werden muss.

Bei einer zweckmässigen Ausbildung einer solchen automatischen Steuerung sind zwei an die Steuerung angeschlossene, die eintreffende Tageslichtmenge messende Helligkeitssensoren vorgesehen. Der erste dieser Sensoren ist derart in einem Solarpanel angeordnet, dass er unterschiedliche Signale abgibt, je nach dem ob an einer durch den Sensor überwachten Stelle auf der Oberfläche der Deckscheibe eine oder eben keine Deckschicht vorliegt. Der zweite dieser Sensoren ist an einer Stelle angeordnet, an der sich keine Deckschicht im vom Sensor überwachten Bereich bilden kann. Somit kann ein Signal für grössere Helligkeit beim zweiten Sensor gegenüber einem Signal für geringere Helligkeit beim ersten Sensor festgestellt werden, wenn das Solarpanel eingeschneit ist. In diesem Fall kann die Heizung eingeschaltet werden. Sobald beide Sensoren gleiche Helligkeitswerte messen, ist die überwachte Stelle des Solarpanels frei von Eis und Schnee. Daher kann die Heizung dann ausgeschaltet werden. Das Ausschalten und Einschalten kann auch verzögert oder abhängig von Aussentemperaturen vollzogen werden. Das Ein- und Ausschalten ist zweckmässigerweise abhängig von einem absoluten Messwert des geschützt angeordneten zweiten Helligkeitssensors, so dass bei Bewölkung oder Schneefall die Heizung nicht eingeschaltet wird.

Vorteilhaft ist an die Steuerung ein Temperatursensor angeschlossen.

Ein Verfahren zur Herstellung einer Solarglas-Scheibe, bei welchem das Glas zu einer endlosen Flachglasplatte einer gewählten Dicke gezogen wird, die harte Flachglasplatte in einzelne Flachglas-Scheiben mit gewählten Abmessungen geschnitten wird, und die geschnittenen Flachglas-Scheiben durch Erwärmen und Abkühlen gehärtet werden, zeichnet sich erfindungsgemäss dadurch aus, dass auf eine Oberfläche der Flachglasplatte oder einer zugeschnittener Flachglas-Scheibe eine Leiterbahn vor dem Erwärmen aufgebracht wird, und dass die Leiterbahn in die Oberfläche eingebrannt wird. Ein solches Verfahren weist lediglich einen kostengünstigen Verfahrensschritt mehr auf. Durch diesen einen Verfahrensschritt wird erreicht, dass die resultierende Glasscheibe geeignet ist zur Verwendung als Deckscheibe für Solaranlagen, welche Solaranlagen in schneereichen Gegenden eingesetzt werden. Das Einbrennen kann als separater Schritt vorgenommen werden, erfolgt jedoch vorteilhaft während dem Härten der Glasscheibe.

Die Leiterbahn wird vorteilhaft mit Siebdruck auf die Oberfläche aufgebracht.

Vorteilhaft wird die Flachglasplatte auf wenigstens einer Glasoberfläche mit einer Mikrostruktur versehen. Diese Mikrostrukturierung ist zweckmässigerweise auf derselben Seite ausgebildet, auf der die Leiterbahnen vorgesehen sind. Leiterbahnen und Mikrostrukturierung sind vorteilhaft auf der Aussenseite einer Solarglasscheibe ausgebildet. Die Mikrostrukturierung besteht aus Erhebungen und dazwischen liegenden Tälern, wobei der Höhenunterschied zwischen Erhebung und Tal (peak to valley) maximal 50 µm, vorzugsweise maximal 30 µm und ganz besonders bevorzugt 20 µm beträgt.

Zweckmässigerweise wird die Mikrostruktur durch Prägen auf die gezogene Flachglasplatte aufgebracht. Die Leiterbahnen werden hinterher auf die mikrostrukturierte Oberfläche aufgebracht. Sie können dabei unter oder über einer allenfalls zusätzliche aufgebrachten Antireflexschicht angeordnet sein.

Es ist möglich, vor dem Härten die Mikrostruktur durch Aufbringen einer Antireflexschicht auf die Flachglasplatte aufzubringen, und die Leiterbahnen auf oder unter dieser mikrostrukturierten Antireflexschicht aufzubringen. Eine solche Antireflexschicht kann durch Aufbringen einer Beschichtungslösung erreicht werden.

Die Beschichtungslösung enthält gelöst in einem Lösungsmittel als Feststoffanteile eine Metall-Alkoxyverbindung und ein im wesentlichen unpolares Polymer. Das Lösungsmittel wird abgedampft und anschliessend das unpolaren Polymer entfernt. Durch die Verwendung der vorbeschriebenen Beschichtungslösung können Antireflexschichten erhalten werden, bei welchen im Bereich zwischen 350 und 2000 nm die solare Transmission um mindestens 2 % erhöht ist.

Vorteilhaft weist der pH der Beschichtungslösung einen Wert < 7 auf. Durch die Verwendung einer Alkoxyverbindung bei einem pH-Wert <7 bilden sich kleinere Partikel als wenn die Alkoxyverbindungen im alkalischen Milieu vorliegen. Ausserdem kommt es zu keinen Anlagerungen des ebenfalls in der Lösung vorliegenden Polymers an die Metallalkoxyverbindung. Vorzugsweise hat die Beschichtungslösung einen pH-Wert zwischen 2 und 6, und ganz besonders bevorzugt einen pH-Wert zwischen 3 und 5. Es hat sich experimentell gezeigt, dass bei diesen pH-Werten gleichmässige nanoporöse Mikrostrukturen erhalten werden können.

Vorzugsweise wird ein leichtflüchtiges, vorzugsweise organisches Lösungsmittel eingesetzt. Vorteilhaft ist im Lösungsmittel Wasser gelöst. Durch einen geringen Wasseranteil kann das Aushärten der Metall-Alkoxyverbindung beschleunigt werden.

Vorzugsweise ist der gewichtsmässige Feststoffanteil < 15%, vorzugsweise < 10% und ganz besonders bevorzugt < 7 % ist. Überraschenderweise können Lösungen mit einem geringen Feststoffanteil gut mit einem Breitschlitzgiesser aufgetragen werden. Zweckmässigerweise liegt das Verhältnis der Feststoffanteile von Metall-Alkoxyverbindung und Polymer in der gehärteten Schicht im Bereich zwischen 1:5 bis 5 :1. Vorteilhaft werden Metall-Alkoxyverbindungen der Elemente Si,Ti, Th, Al und/oder Zr eingesetzt. Mit metallorganischen Verbindungen dieser Elemente können stabile gut haftende Schichten hergestellt werden. Vorzugsweise werden monomere Metall-Alkoxyverbindungen eingesetzt.

Vorteilhaft hat die Beschichtungslösung die nachfolgenden rheologischen Eigenschaften: Viskosität kleiner 20 mPas, vorzugsweise kleiner 10 mPas; Normalspannung senkrecht zur Scherspannung größer 7.0 Pa; Normalkraft größer 6.0 Nm. Beschichtungslösungen mit diesen Eigenschaften lassen im Beschichtungsverfahren, insbesondere Dehnschichtverfahren, auftragen. Durch eine schockartige Verdampfung des Lösungsmittels unmittelbar nach dem Beschichten kann eine Feststoffschicht gebildet werden. Es lassen sich somit ausgehärtete Schichten mit Schichtdicken von mindestens ca. 50 nm, vorzugsweise eine solche zwischen 100 und 300 nm herstellen. Das Verfahren hat insbesondere den Vorteil, dass die auf das Substrat aufgebrachte Feststoffschicht ohne weitere Zwischenbehandlung durch eine Hochtemperaturthermoschockbehandlung innerhalb des technisch üblichen Glashärteprozesses gemeinsam mit dem Flachglas gehärtet werden kann. Durch die Hochtemperaturthermoschockbehandlung verdampft das Polymer und die Feststoffschicht wird in eine nanoporöse Schicht, insbesondere Antireflexschicht, umgewandelt. Die so hergestellten nanoporösen Schichten können einen Brechungsindex n < 1.23 aufweisen. Durch das Beschichtungsverfahren kann wahlweise eine Beschichtung mit einem Brechungsgradienten normal zur Oberfläche, vom Brechungsindex des Flachglases übergehend in denjenigen der Luft bzw. des anderen angrenzenden Mediums, hergestellt werden. Somit ist das Verfahren äusserst vielseitig einsetzbar und kostengünstig.

### Kurzbeschreibung der Figuren

Bei den schematischen Zeichnungen zeigt:
- Fig. 1: eine Flachglas-Scheibe mit aufgedruckten Leiterbahnen,
- Fig. 2: die Scheibe gemäss Fig. 1, auf ihrer Unterseite mit photovoltaischen Zellen versehen und in einem Rahmen gefasst,
- Fig. 3: einen Querschnitt durch eine Scheibe mit aufgedruckter Leiterbahn und einer Antireflexbeschichtung über der Leiterbahn,
- Fig. 4: einen Querschnitt durch eine Scheibe mit einer auf eine Antireflexbeschichtung aufgedruckten Leiterbahn,
- Fig. 5: einen Querschnitt durch eine Scheibe mit eingeprägten Mikrostrukturen und einer aufgedruckten Leiterbahn,
- Fig. 6: eine Flachglasplatte mit einer Einteilung, welche die Schneidlinien zeigt und einem Siebdrucksieb zum Bedrucken einer Reihe von aus der Flachglasplatte zu schneidenden Scheiben,
- Fig. 7: einige aus einer Flachglasplatte geschnittene Scheiben und ein Siebdrucksieb zum Bedrucken einer solchen Scheibe,
- Fig. 8: eine verschneite Solaranlage,
- Fig. 9: die Solaranlage gemäss Figur 8 nach einem Defrost-Vorgang.

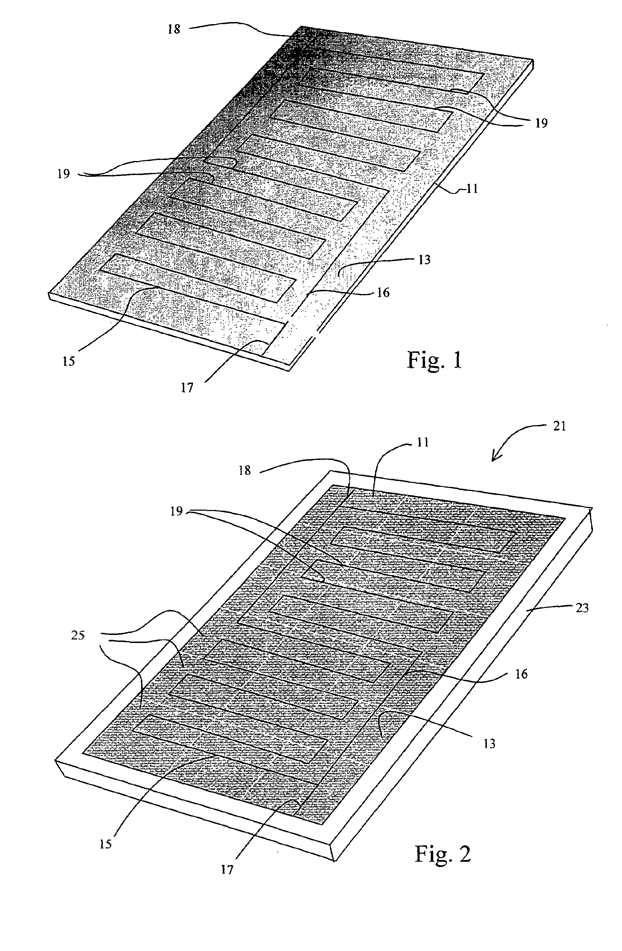

Die in Figur 1 dargestellte Scheibe 11 besitzt eine bestimmte Länge, Breite und Dicke. Diese Abmessungen sind je nach Verwendungszweck unterschiedlich. Die obere Oberfläche 13 ist mit zwei Leiterbahnen 15,16 versehen. Die Leiterbahnen 15,16 besitzen gemeinsame Anschlussstellen 17, 18. Das Glas in Figur 1 weist keine besondere Oberflächenstruktur auf. Durch den Reflexstern ist angedeutet, dass die Oberfläche 13 nicht antireflexbehandelt ist. Ein solches Glas kann beispielsweise für einen Wärmekollektor oder ein Wintergartendach verwendet werden.

Die chemische Analyse eines vorteilhaft eingesetzten Glases hat die folgenden wesentlichen Hauptbestandteile:

| | |
|---|---|
| Siliziumoxid (SiO₂) | 73.94% |
| Natriumoxid (Na₂O) | 15.07% |
| Calciumoxid (CaO) | 9.91% |

Daneben kann das Glas noch geringe Mengen an MgO, K₂O, SO₃, TiO₂, BaO und MnO enthalten. Die Anteile der vorgenannten Oxide beträgt vorzugsweise zusammen genommen weniger als 1.1 Gewichtsprozente.

Solches Glas besitzt einen hohen hemisphärischen Transmissionsgrad. Gläser mit einer hohen Transmission für die Sonnenstrahlung werden vorteilhaft für photovoltaische Solarzellen und thermische Kollektoren eingesetzt. In Solarzellen werden Glasscheiben als Träger für die Halbleiterschichten verwendet, die für die Umwandlung der Lichtenergie in Strom verantwortlich sind. Thermische Kollektoren bestehen im wesentlichen aus einem flachen Wärmetauscher, welcher hinter einer Glasscheibe angeordnet ist. Die Glasscheibe isoliert den Wärmetauscher thermisch von der Umgebungsluft, damit möglichst wenig der eingefangenen Sonnenstrahlung wieder an die Umgebung abgegeben wird.

Solargläser sollen möglichst viel der Sonnenstrahlung durchlassen und möglichst wenig reflektieren. Um eine möglichst hohe Transmission und eine möglichst geringe Reflexion zu erreichen, sind bei Solargläsern vorteilhaft wenigstens die nach aussen zu richtende Glasoberflächen mit einer Mikrostruktur versehen.

Diese Mikrostruktur kann aus in der Glasscheibe ausgebildeten Erhebungen und dazwischenliegenden Tälern bestehen. Die Mikrostruktur kann aber auch durch Aufbringen einer Antireflexschicht mit einer dreidimensionalen Ausformung erreicht werden.

Der Höhenunterschied zwischen Erhebung und Tal (peak to valley) beträgt vorteilhaft maximal 50 µm, vorzugsweise maximal 30 µm und ganz besonders bevorzugt 20 µm. Es können auch beide gegenüberliegenden Oberflächen mit einer Mikrostruktur versehen sein. Der Vorteil einer auf beiden Glasoberflächen eine dreidimensionale Mikrostruktur aufweisenden Glasscheibe besteht darin, dass das Glas in Solarpanelen in beliebiger Orientierung eingebaut werden kann. Beidseitig strukturierte Gläser weisen ein Transmissionsvermögen auf, das demjenigen von einseitig strukturierten Glasscheiben entspricht oder sogar überlegen ist. Untersuchungen haben gezeigt, dass derart ausgebildete reliefartige Strukturen ein hohes Transmissionsvermögen der Gläser gewährleisten.

In Figur 2 ist eine Solarzelle 21, das ist ein photovoltaisches Solarpanel, dargestellt. Diese Solarzelle 21 weist eine Deckscheibe 11 aus demselben Material wie die Scheibe 11 gemäss Figur 1 und einen Rahmen 23 auf. Ihre äussere Oberfläche 13 ist jedoch mit den Leiterbahnen 15,16 und einer Mikrostruktur versehen. Die Mikrostruktur bewirkt einen matten Eindruck und erhöht die Leistungsfähigkeit der Solarzelle 21. Die Leiterbahnen 15,16 können mittels Strom aufgeheizt werden. Diese Solarzelle 21 eignet sich daher besonders für den Einsatz in höheren Lagen, in denen regelmässig Schneefall erwartet werden muss. Die Solarzelle 21 weist auf der Rückseite der Deckscheibe 13 photovoltaische Zellen 25 auf, mit denen elektrische Energie aus Sonnenlicht gewonnen werden kann. Dieselbe Deckscheibe 11 ist jedoch auch für thermische Kollektoren geeignet. Hinter und mit Abstand zur Deckscheibe 11 ist bei thermischen Kollektoren ein mit einem Wärmemedium durchströmbares Kollektorelement angeordnet.

Die Leiterbahnen 15,16 bilden Leiterbahnabschnitte 19, die parallel verlaufen. In Figuren 1 und 2 sind diese Leiterbahnabschnitte 19 parallele geradlinige Abschnitte, die mit rechtwinkligen Ecken aneinander stossen. Die Leiterbahnabschnitte 19 können aber auch z.B. durch mäandernde Linien gebildet sein.

Zweckmässigerweise ist die Mikrostruktur der Deckscheibe 11 herstellbar durch Prägen des aus einer Schmelze gezogenen Glases mit Walzen, welche eine Mikrostruktur aufweisen und einander gegenüberliegend angeordnet sind, so dass beim Durchgang der noch formbaren Glasscheiben zu der auf der Walze vorliegenden Mikrostruktur komplementäre Mikrostrukturen in die Glasoberflächen eingedrückt werden. Dies ist ein kostengünstiger Herstellungsprozess.

Besonders bevorzugte Mikrostrukturen beschreiben im Schnitt eine Cosinus-, Gaussoder Kegelfunktion. Diese Strukturen besitzen ein sehr gutes winkelabhängiges Transmissionsverhalten. Weiterer Vorteil ist, dass es praktisch keine Rolle spielt, ob die Strukturen männlich oder weiblich sind. Weitere zweckmässige Mikrostrukturen sind pyramidal mit trigonaler, quadratischer oder hexagonaler Basis, konusförmig, Halbkugeln, oder auf der Glasoberfläche sitzende Kugelabschnitte.

Vorteilhaft beträgt das Verhältnis von Strukturhöhe zur Strukturbreite maximal 50 µm/800 µm, vorzugsweise 30 µm/800 µm und ganz besonders bevorzugt 20 µm/800 µm. Diese Glasscheiben besitzen das höchste Transmissionsvermögen.

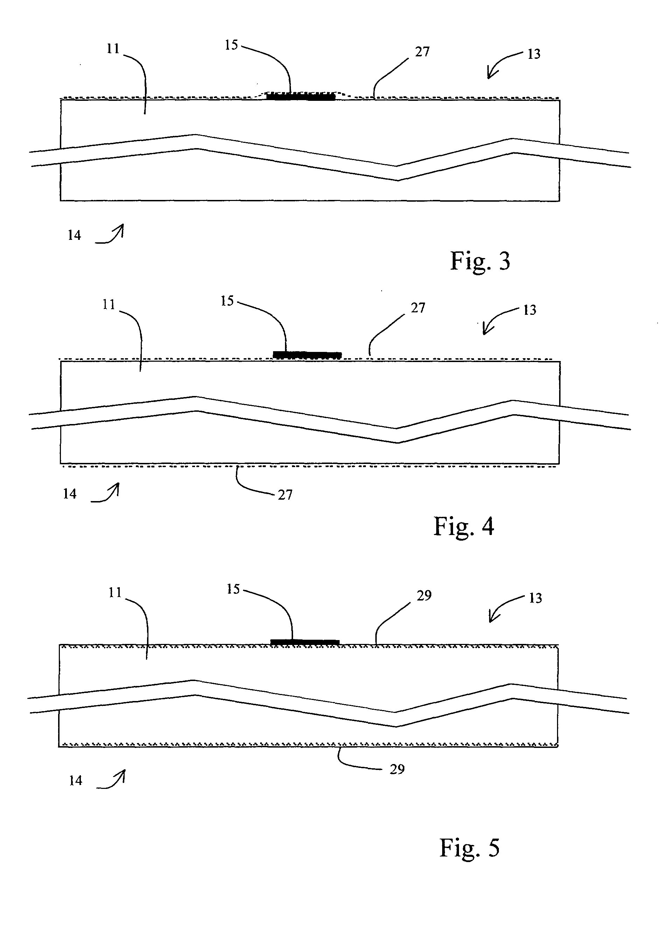

Zusätzlich zur oder anstelle der geprägten Mikrostruktur kann eine Antireflexschicht 27 auf der Glasscheibe 11 aufgebracht sein (vergleiche Fig. 3 und 4). Die Antireflexschicht 27 kann grundsätzlich auf der Mikrostruktur oder auf der glatten Glasoberfläche aufgebracht sein. Mittels der Antireflexschicht 27 kann die Transmission bis gegen 100% betragen. Die Antireflexschicht kann ein- oder mehrlagig sein und ist vorzugsweise erhältlich durch ein Sol-Gel-Verfahren, Prägeverfahren, Aufsprühen (spray coating), Aufdampfen oder Aufsputtern.

In einer Ausführungsvariante ist die Antireflexschicht 27 eine poröse Polymerschicht. Die Polymer-Verbindungen können grundsätzlich auf die bereits gehärtete Glasoberfläche 13 aufgebracht werden durch Eintauchen in eine Lösung enthaltend die Polymer-Verbindungen oder durch Aufschleudern (spin-coating).

In einer anderen Ausführungsvariante wird die Antireflexschicht 27 durch Aufbringen einer Beschichtungslösung erreicht, welche gelöst in einem Lösungsmittel als Feststoffanteile eine Metall-Alkoxyverbindung und ein im wesentlichen unpolares Polymer enthält. Das Lösungsmittel wird abgedampft; und anschliessend das unpolare Polymer entfernt. Die Entfernung des Polymers kann durch Erhitzen erfolgen. Die zurückbleibende Schicht 27 aus Feststoffpartikeln wird zusammen mit den Leiterbahnen 15,16 in die Glasoberfläche 13 eingebrannt.

In Figur 3 ist eine Antireflexschicht 27 über der Leiterbahn 15 dargestellt. Diese kann daher sowohl eine eingebrannte Schicht sein, oder eine nach dem Einbrennen der Leiterbahn 15 aufgetragene Polymerschicht.

In Figur 4 ist auf der oberen Glasoberfläche 13 eine Antireflexschicht 27 und auf dieser eine Leiterbahn 15 angeordnet. Diese Antireflexschicht 27 und die Leiterbahn 15 sind miteinander in die Glasoberfläche eingebrannt. Auf der unteren Oberfläche 14 ist ebenfalls eine Antireflexschicht 27 ausgebildet. Die Antireflexschicht auf der unteren Oberfläche 14 ist vorteilhaft ebenfalls eine eingebrannte, kann aber auch eine nach dem Härten aufgebrachte Antireflexschicht 27 sein.

In Figur 5 ist eine beidseitig geprägte Glasscheibe 11 mit einer eingebrannten Leiterbahn 15 dargestellt. Jede der verschieden beschaffenen Oberflächen kann bei einer Glasscheibe 11 innen und/oder aussen vorliegen. Die unterschiedlichen Behandlungen der Oberflächen können miteinander kombiniert werden. Die Kombination kann durch Ausbilden von unterschiedlichen Antireflexoberflächen auf den beiden gegenüberliegenden Flächen 13,14 der Glasscheibe 11 und/oder durch Addition verschiedener oder gleicher Behandlungen auf einer der Flächen 13,14 der Glasscheibe 11 geschehen.

Für Anwendungen in der Solartechnik kann die Glasscheibe 11 beispielsweise aussen eine Antireflexschicht 27 aufweisen und auf der abgewandten Glasoberfläche 14 eine eingeprägte Mikrostruktur 29 (vergleiche Fig. 5). Auf diese Weise hat man aussen eine gut zu reinigende Glasoberfläche 13, und weiter durch die Antireflexschicht 27 und die Mikrostruktur 29 eine Glasscheibe 11 mit einem sehr hohen Transmissionsgrad für das sichtbare Licht.

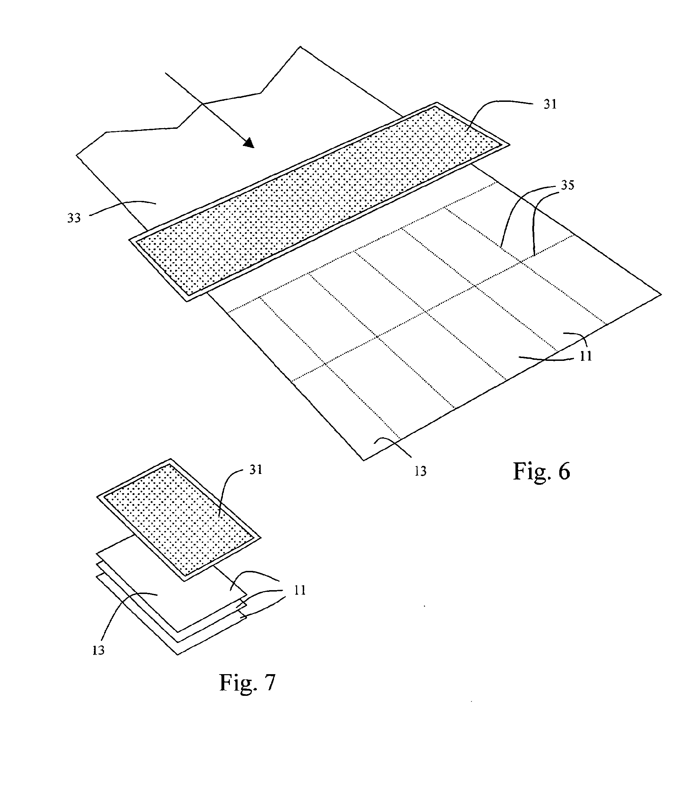

Das Aufbringen der Leiterbahnen 15,16 erfolgt vorteilhaft mittels Siebdruck. In den Figuren 6 und 7 sind zwei mögliche Varianten zum Bedrucken der Glasoberfläche 13 dargestellt. In Figur 6 ist eine Flachglasplatte 33 und ein Drucksieb 31 dargestellt. Die Breite des Drucksiebs 31 entspricht der Breite der Flachglasplatte 33, so dass die Flachglasplatte 33 vor einem Zerschneiden der Flachglasplatte 33 bedruckt werden kann. Die Flachglasplatte 33 wird dazu etappenweise auf ihre gesamten Breite bedruckt. Der Druck erfolgt wiederholt jeweils um eine Siebbreite weiter in Richtung zur Glasquelle versetzt. Danach wird die abgekühlt Glasplatte 33 in Glasscheiben 11 mit gewählten Abmessungen zerschnitten. Der Aufdruck und die Abmessungen der Glasscheiben 11 bzw. die Schnittlinien 35 sind in aller Regel aufeinander abgestimmt.

In Figur 7 ist gezeigt, dass die Flachglasplatte 33 auch zuerst zerschnitten werden kann, wobei die Leiterbahnen 15,16 (nicht dargestellt) erst danach aufgedruckt werden. Dazu werden kleinere Drucksiebe 31 benötigt, deren Abmessungen nicht auf die Breite der Flachglasplatte 33, sondern auf die Abmessungen der zugeschnittenen Glasscheiben 11 abgestimmt sind.

In beiden Fällen werden die zugeschnittenen und bedruckten Glasscheiben 11 nach dem Bedrucken und Zuschneiden gehärtet. Durch den Härtevorgang werden die Leiterbahnen 15,16 und allfällig aufgebrachte Antireflexschichten 27 in die Oberfläche 13,14 des Glases eingebrannt.

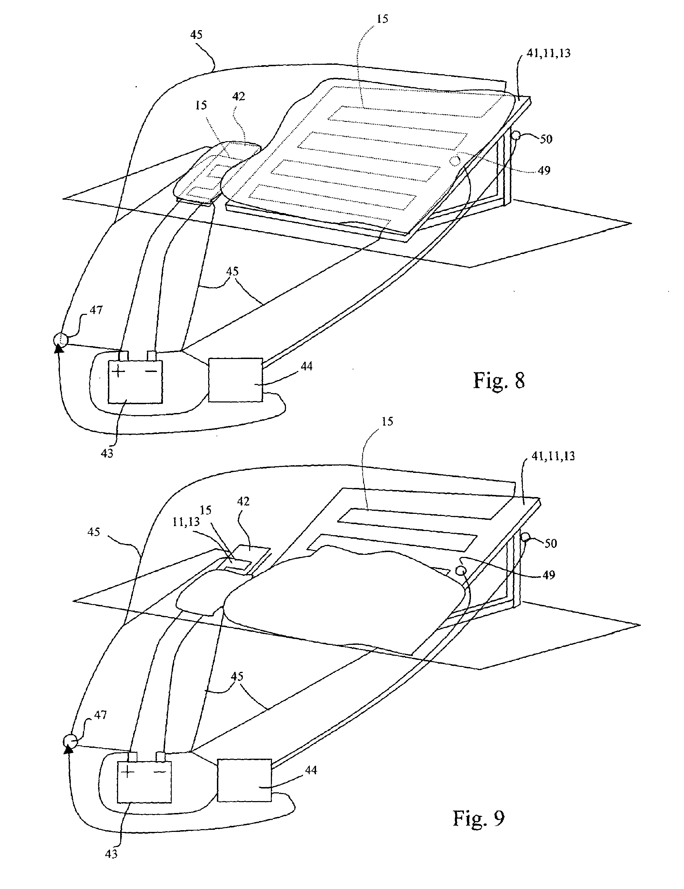

Die in Figuren 8 und 9 schematisch dargestellte Solaranlage besitzt einen Wärmekollektor 41, eine Solarzelle 42, einen Akkumulator 43 und eine Steuerung 44. Die beiden Solarpanele 41 und 42 sind mit einer erfindungsgemässen Deckscheibe 11 abgedeckt. Diese Deckscheibe 11 besitzt auf Ihrer Oberseite 13 eine Leiterbahn 15. Die Leiterbahnen 15 von Solarzelle 42 und Wärmekollektor 41 sind an den Akkumulator 43 angeschlossen. Die Leiterbahnen 15 sind über Verbindungsleitungen 45 mit dem Akkumulator 43 verbunden. Im Kreislauf gebildet aus Akkumulator 43, Leiterbahnen 15 und Verbindungsleitungen 45 ist ein Schalter 47 vorgesehen. Mit dem Schalter 47 kann der Stromkreislauf geschlossen oder unterbrochen werden. Der Schalter 47 ist von der Steuerung 44 gesteuert. Die Steuerung 44 ist mit zwei Helligkeitssensoren 49,50 verbunden. Einer der Helligkeitssensoren 49 ist im Wärmekollektor untergebracht, der andere 50 ist unter dem Wärmekollektor untergebracht. Beide Helligkeitssensoren 49,50 sind etwa zum Zenit ausgerichtet und messen daher unbedeckt praktisch die selben Helligkeitswerte.

Der Akkumulator 43 ist an die photovoltaische Solarzelle 42 angeschlossen und wird von dieser jeweils bei Sonneneinstrahlung geladen. Vom Akkumulator bezieht ferner die Steuerung 44 die benötigte Energie.

Die Messwerte der Helligkeitssensoren 49 werden von der Steuerung 44 verarbeitet. In Figur 8 liegt Schnee auf den Deckscheiben 11, so dass der Helligkeitssensor 49 im Wärmekollektor 41 durch die Schneeschicht abgedeckt ist. Daher misst dieser eine niedrigere Helligkeit als der ausserhalb des Wärmekollektors 41 an geschützter Stelle positionierte zweite Helligkeitssensor 50. Der zweite Helligkeitssensor leitet an die Steuerung einen Messwert, der je nach Tageslichtintensität unterschiedlich ist. Die Steuerung 44 schaltet aufgrund dieser Unterschiedlichkeit der Messwerte und des absoluten Messwerts des zweiten Helligkeitssensors 50 den Schalter 47. Zum Schliessen des Stromkreises ist erforderlich, dass der zweite Helligkeitssensor 50 einen absoluten Messwert liefert, der für hohe Helligkeitswerte steht, und dass der erste Helligkeitssensor 49 einen Messwert liefert, der für eine niedrigere Helligkeit steht. Dies ist der Fall bei hoher Zenitstrahlung und bedeckter Deckscheibe 11.

In einer solchen Situation, welche in Fig. 8 dargestellt ist, schaltet die Steuerung den Schalter 47 und schliesst damit den Stromkreis durch die Leiterbahnen 15. Diese Leiterbahnen werden dadurch erwärmt. Durch die Erwärmung schmilzt die unterste Schneeschicht und bildet eine Wasserschicht auf der Deckscheibe, auf welcher Wasserschicht die Schneeschicht abrutscht.

In Figur 9 ist die Schneeschicht auf den Deckscheiben 11 bereits abgerutscht. Der Helligkeitssensor 49 ist nicht mehr bedeckt. Daher liefern die beiden Helligkeitssensoren dieselben Messwerte. Die Steuerung veranlasst in der Folge die Unterbrechung des Stromkreises.

Je nach Position des ersten Helligkeitssensors 49 im Solarpanel 41 schmilzt daher mehr oder weniger Schnee ab, bis der Heizkreislauf durch die Leiterbahnen wieder unterbrochen wird.

## Patentansprüche

1. Gehärtete Flachglas-Scheibe (11) aus einem Glas, mit zwei einander gegenüberliegenden, parallelen Oberflächen (13,14), **gekennzeichnet durch** eine oder mehrere elektrische Leiterbahnen (15,16) an einer dieser Oberflächen (13), mit welchen Leiterbahnen (13,14) Leiterbahnabschnitte (19) zum elektrischen Widerstandheizen gebildet sind, insbesondere parallele gerade Leiterbahnabschnitte (19) und/oder parallel ausgerichtete, von einer Geraden abweichende Leiterbahnabschnitte (19), welche Leiterbahnabschnitte (19) bezüglich einer Längsrichtung der Leiterbahnabschnitte (19) mit Abstand nebeneinander angeordnet sind.

2. Flachglas-Scheibe nach Anspruch 1, **dadurch gekennzeichnet, dass** die Leiterbahnabschnitte (19) ein Breite von maximal 0,6 mm, vorzugsweise maximal 0,4, besonders bevorzugt maximal 0,3 mm aufweisen.

3. Flachglas-Scheibe nach Anspruch 1 oder 2, **dadurch gekennzeichnet, dass** die Abstände zwischen zwei Leiterbahnabschnitten (19) wenigstens 3 cm, vorzugsweise wenigstens 4, besonders bevorzugt wenigstens 6 cm betragen.

4. Flachglas-Scheibe nach einem der Anspüche 1 bis 3, **dadurch gekennzeichnet, dass** die Leiterbahnen (15,16) weniger als 2%, vorzugsweise weniger als 1,5 %, besonders bevorzugt weniger als 1% der Oberfläche (13) der Flachglas-Scheibe (11) abdecken.

5. Flachglas-Scheibe nach einem der Ansprüche 1 bis 4, **dadurch gekennzeichnet, dass** die Leiterbahnabschnitte (19) in einem ersten Randbereich der Oberfläche (13) dichter angeordnet sind als in einem diesem Randbereich gegenüberliegenden Bereich derselben Oberfläche (13).

6. Flachglas-Scheibe nach Anspruch 5, **dadurch gekennzeichnet, dass** die Leiterbahnabschnitte (19) lediglich in dem ersten Randbereich der Oberfläche (13) angeordnet sind.

7. Flachglas-Scheibe nach einem der Ansprüche 1 bis 6, **dadurch gekennzeichnet, dass** das Glas einen Eisenoxid-Gehalt von weniger als 0.02 Gewichtsprozenten aufweist.

8. Flachglas-Scheibe nach einem der Ansprüche 1 bis 7, **dadurch gekennzeichnet, dass** die mit den Leiterbahnen (15,16) versehene Glasoberfläche (13) eine Mikrostruktur aufweist, welche aus Erhebungen und dazwischen liegenden Tälern besteht und der Höhenunterschied zwischen Erhebung und Tal (peak to valley) maximal 50 µm, vorzugsweise maximal 30 µm und ganz besonders bevorzugt 20 µm beträgt.

9. Flachglas-Scheibe nach einem der Anspüche 1 bis 8, **dadurch gekennzeichnet, dass** die Flachglas-Scheibe (11) mit einer Antireflexschicht (27) beschichtet ist.

10. Photovoltaisches oder thermisches Solarpanel (21) mit einer Deckscheibe (11) aus Solarglas, **gekennzeichnet durch** eine oder mehrere elektrische Leiterbahnen (15,16) an einer Oberfläche (13) der Deckscheibe (11), mit welchen Leiterbahnen (13,14) Leiterbahnabschnitte (19) zum elektrischen Widerstandheizen gebildet sind, welche Leiterbahnabschnitte (19) bezüglich einer Längsrichtung der Leiterbahnabschnitte (19) mit Abstand nebeneinander angeordnet sind.

11. Photovoltaische oder thermische Solaranlage mit wenigstens einem Solarpanel (21) gemäss Anspruch 10, **gekennzeichnet durch** eine elektrische Energiequelle (43) und elektrischen Verbindungsleitungen (45) zwischen der Energiequelle (43) und den Leiterbahnen (15,16) auf dem Solarglas der Deckscheibe (11) des Solarpanels (21), und einem Schalter (47) zum Verbinden und Unterbrechen des **durch** Leiterbahnen (15,16), Verbindungsleitungen (45) und Energiequelle (43) gebildeten Stromkreislaufs.

12. Solaranlage nach einem der Ansprüche 10 oder 11, **gekennzeichnet durch** eine Steuerung (44) zum Betätigen des Schalters (47) und wenigstens einen an die Steuerung (44) angeschlossen Sensor (49,50).

13. Solaranlage nach Anspruch 12, **gekennzeichnet durch** zwei an die Steuerung angeschlossene, die eintreffende Tageslichtmenge messende Helligkeitssensoren, von denen der erste derart in einem Solarpanel angeordnet ist, dass er unterschiedliche Signale abgibt, je nach dem ob an einer Stelle auf der Oberfläche der Deckscheibe (11) eine oder keine Deckschicht vorliegt, und der zweite an einer Stelle angeordnet ist, an der sich keine Deckschicht im vom Sensor überwachten Bereich bilden kann.

14. Solaranlage nach Anspruch 12 oder 13, **gekennzeichnet durch** einen an die Steuerung (44) angeschlossenen Temperatursensor.

15. Verfahren zur Herstellung einer Solarglasscheibe (11) aus Glas, bei welchem das Glas zu einer endlosen Flachglasplatte (33) einer gewählten Dicke geformt, insbesondere gezogen wird, die harte Flachglasplatte (33) in einzelne Scheiben (11) mit gewählten Abmessungen geschnitten wird, und die geschnittenen Scheiben (11) durch Erwärmen und Abkühlen gehärtet werden, **dadurch gekennzeichnet, dass** auf eine Oberfläche (13) der Flachglasplatte (33) oder einer zugeschnittener Scheibe (11) eine Leiterbahn (15,16) vor dem Erwärmen aufgebracht wird, und die Leiterbahn (15,16) in die Oberfläche (13) eingebrannt wird.

16. Verfahren nach Anspruch 15, **dadurch gekennzeichnet, dass** die Leiterbahnen (15,16) während dem Härten der Glasscheibe (11) eingebrannt werden.

17. Verfahren nach Anspruch 15 oder 16, **dadurch gekennzeichnet, dass** die Leiterbahn (15,16) mit Siebdruck auf die Oberfläche (13) aufgebracht wird.

18. Verwendung einer gehärteten Flachglas-Scheibe (11), mit zwei einander gegenüberliegenden, parallelen Oberflächen (13,14), einer oder mehreren elektrischen Leiterbahnen (15,16) an einer dieser Oberflächen (13), mit welchen Leiterbahnen (13,14) Leiterbahnabschnitte (19) zum elektrischen Widerstandheizen gebildet sind, welche Leiterbahnabschnitte (19) bezüglich einer Längsrichtung der Leiterbahnabschnitte (19) mit Abstand nebeneinander angeordnet sind, als Deckscheibe (11) eines photovoltaischen oder thermischen Solarpanels (21).
